# EUROPÄISCHE PATENTSCHRIFT

(11) **EP 3 733 342 B1**
(45) Veröffentlichungstag und Bekanntmachung des Hinweises auf die Patenterteilung: **26.07.2023**
(21) Anmeldenummer: 20171889.7
(22) Anmeldetag: 28.04.2020
(51) Int. Cl.: B23Q 7/14, G01G 19/03

(54) **FÖRDEREINRICHTUNG**
TRANSPORT INSTALLATION
DISPOSITIF DE TRANSPORT

(30) Priorität: 03.05.2019 DE 202019102508 U
(43) Veröffentlichungstag der Anmeldung: 04.11.2020
(73) Patentinhaber: WIPOTEC GmbH, 67657 Kaiserslautern (DE)
(72) Erfinder: Schulzki, Alexander, 67705 Stelzenberg (DE); Joachim, Matthias, 66953 Pirmasens (DE); Clößner, Stephan, 35630 Ehringshausen (DE); Eckhardt, Christoph, 35236 Breidenbach (DE); Gerlach, Jochen, 35232 Dautphetal (DE)
(74) Vertreter: Eder Schieschke & Partner mbB

(56) Entgegenhaltungen:
- CH-A5- 695 561
- DE-A1-102016 207 600
- DE-U1-202005 017 255

## Beschreibung

Die vorliegende Erfindung betrifft eine Fördereinrichtung zum Transportieren von Produkten.

Industrieanlagen zur Herstellung oder Verpackung von Gütern umfassen häufig Förderstrecken, entlang derer die Güter nacheinander zu verschiedenen Bearbeitungsstationen transportiert werden. Zu solchen Bearbeitungsstationen können insbesondere Sortierer, Waagen, Verpackungs- und Inspektionsmaschinen und Kennzeichnungsvorrichtungen zählen. Weitere, dem Fachmann bekannte Vorrichtungen sind ebenfalls denkbar, um die Produkte je nach gewünschter Bearbeitung entsprechend zu behandeln.

Die Produkte werden dabei mittels einer Fördereinrichtung zu den einzelnen Bearbeitungsstationen bewegt. Spezielle Förderglieder (Mitnehmer, Haken etc.) werden dabei entlang eines Fördererelements, beispielsweise einer Schiene, in einer Förderrichtung bewegt und sind ihrerseits mit einzelnen Trägern koppelbar. Jeder Träger ist zur Aufnahme eines oder mehrerer Produkte ausgebildet. Denkbar ist bspw. ein mit einer Förderkette oder einem Seilzug angetriebener, als Träger dienender Schlitten oder Wagen oder eine Gruppe von Schlitten oder Wagen, mit denen die Produkte mittelbar oder unmittelbar aufgenommen werden, um sie in die einzelnen Bearbeitungsstationen hinein- bzw. wieder heraus zu transportieren.

Üblicherweise sind die entlang der Förderstrecke transportierten Träger auf die jeweils zu transportierenden Güter zugeschnitten und weisen besondere Konturen oder Abmaße auf, um die Güter sicher aufnehmen und transportieren zu können. Die Träger können mit den Fördergliedern verbunden werden durch einfaches Einsetzen, Verschrauben, Einrasten etc. Der Träger gestattet es, unterschiedliche Produkte mit derselben Fördereinrichtung zu transportieren, indem bspw. oberer Bereich des Trägers zur Aufnahme unterschiedlicher Produkte ausgebildet ist, während die Unterseite dazu ausgebildet ist, mit den Gliedern einer Fördereinrichtung zu koppeln.

Bekannt ist es ferner, bestimmte Produkthalter für die einzelnen Träger vorzusehen. Die Produkthalter können auf die Träger aufgesetzt oder in diese eingesetzt werden und dienen dazu, das zu transportierende Produkt unmittelbar aufzunehmen. Ein Produkthalter kann beispielsweise zur Auflage von Wurst- oder Käsescheiben ausgebildet sein. Auch Produkthalter zur Aufnahme fließfähiger oder rieselfähiger Produkte sind bekannt.

Die Träger haben vorwiegend die Aufgabe des Gütertransports entlang der Förderstrecke, ohne dass besondere Anforderungen an die hochgenaue Positionierung der Träger während des Transports oder auch an den einzelnen Bearbeitungsstationen bestehen. In der Regel reicht es aus, die von den Trägern transportierten Güter in den einzelnen Bearbeitungsstationen innerhalb vorgebbarer grober Toleranzen zu positionieren, um die Produkte dort bspw. verpacken oder zu Prüfungszwecken durchstrahlen zu können. Werden die Träger bspw. entlang einer Schiene transportiert, so genügt in der Regel in den einzelnen Bearbeitungsstationen die Positioniergenauigkeit, die sich aus der Kopplung zwischen Schiene und dem Träger ergibt. Positionierungenauigkeiten können sich dabei ergeben durch ein bestehendes mechanisches Spiel quer zur Förderrichtung (im weiteren "Y-Richtung") zwischen Schiene und Träger. Auch in Förderrichtung (im weiteren "X-Richtung") können Positioniertoleranzen auftreten, etwa wenn die Träger von einer spielbehafteten Kette, einem Getriebe oder einer Spindel angetrieben werden. Für eine Reihe von Bearbeitungsstationen sind solche Positioniertoleranzen akzeptabel.

Schwierigkeiten treten aber dann auf, wenn die Produkte in einer Bearbeitungsstation sehr genau im Raum positioniert werden müssen. Dies gilt bspw. für eine als Waage ausgeführte Bearbeitungsstation, mit der das Gewicht der von den Trägern transportierten Güter erfasst werden soll. Um ein Produkt in einer als Waage ausgebildeten Bearbeitungsstation wiegen zu können, ist es zweckmäßig, das Produkt (ggf. gemeinsam mit einer bekannten Vorlast) "freizustellen". Darunter wird der Zustand verstanden, in dem die Gewichtskraft des Produkts (ggfls. mit Vorlast) vollständig in den Lastaufnehmer einer Wägezelle der Waage eingeleitet wird, ohne dass eine form- oder kraftschlüssige Verbindung des Produktes zu einer nicht mitzuwiegenden Komponente bestehen bleibt.

Der vom Träger aufgenommene Produkthalter bildet in der Praxis häufig Vorlast, wird also gemeinsam mit dem Produkt gewogen. Daher muss der Produkthalter zum Wiegen vollständig von dem ihm zugeordneten Träger entkoppelt ("freigestellt") werden, um einen Kraftnebenschluss und damit ein verfälschtes Wägeergebnis zu vermeiden. Um die Freistellung des Produkthalters vom Träger sicher zu erreichen, muss zunächst die Position des Trägers im Raum, insbesondere in der X-Y-Ebene, innerhalb enger Toleranzen vorgegeben oder bekannt sein, damit bei der anschließenden Freistellung der Produkthalter möglichst zentrisch aus dem Träger herausgehoben werden kann, ohne dabei zu verkippen oder zu verrutschen. Nur dann kann die Freistellung durch eine möglichst einfache, kleine und schnelle Relativbewegung zwischen dem Träger und dem Produkthalter erreicht werden. Die groben Toleranzen, mit denen aus dem Stand der Technik bekannte Träger entlang der Förderstrecke bewegt werden, sind daher ungeeignet, um die mit den Trägern transportierten Produkthalter ausreichend genau auszurichten.

Aus der CH 695 561 A5 ist eine Vorrichtung zum Positionieren eines Werkstücks bekannt, die den Oberbegriff des Anspruchs 1 offenbart.

Dazu wird ein vorpositionierter Werkstückträger mittels eines horizontal auf den Träger einwirkenden Dorns gegen eine dem Dorn gegenüberliegende, sich längs des Trägers erstreckende Positionierstange geklemmt und dabei geringfügig angehoben. Eine prismenartige Aufnahme im Träger und der konische Dorn ermöglichen dadurch eine hohe und wiederholbare Positioniergenauigkeit.

Aufgabe der Erfindung war es daher, eine Vorrichtung und ein Verfahren anzubieten, mit dem die Träger soweit genau ausgerichtet werden können, dass eine anschließende Freistellung des Produkthalters relativ zum Träger einfach und schnell möglich ist. Die Aufgabe wird gelöst durch eine Fördereinrichtung nach Anspruch 1 und ein Verfahren nach Anspruch 15. Weitere vorteilhafte Ausführungsformen ergeben sich aus den Unteransprüchen.

Die Erfindung basiert auf der Erkenntnis, einen entlang einer Fördereinrichtung transportierten Träger in einer Bearbeitungsposition mit Hilfe von speziellen Ausrichtmitteln möglichst genau vorpositionieren zu können, sodass das anschließende Freistellen durch einfache Relativbewegung zwischen Träger und Produkthalter möglich wird, vorzugsweise durch eine nur eindimensionale Bewegung.

Die zum Ausrichten des Trägers erfindungsgemäß vorgesehenen ersten Ausrichtmittel sind so konfiguriert, dass sie einen in einer Bearbeitungsposition entlang der Förderstrecke eingetroffenen Träger in eine vorgebbare Trägersolllage überführen können. Dies geschieht durch Beaufschlagung und Bewegung des Trägers relativ zur Förderereinrichtung oder einer anderen Komponente, die zumindest bezüglich ihrer horizontalen Anordnung im Raum ortsfest ist. Zusätzlich zu der nur groben Positionierung, die der Träger über seine Kopplung an die Komponenten der Fördereinrichtung erfährt, gewährleisten die erfindungsgemäßen ersten Ausrichtmittel die Überführung des in der Bearbeitungsposition eingetroffenen Trägers in die genau vorgebbare Trägersolllage. Der Träger kann so, relativ zur Fördereinrichtung oder einer mit dieser verbundenen Komponente, verschoben und/oder verkippt werden, um das anschließende Freistellen des von dem Träger aufgenommenen Produkthalters auf einfache Weise zu ermöglichen. Vorzugsweise ist die Kopplung zwischen der Fördereinrichtung und dem Träger innerhalb grober Toleranzen so gewählt, dass sich die durch die ersten Ausrichtmittel bewirkte genaue Ausrichtung des Trägers innerhalb dieser Toleranzen bewegt.

Zweckmäßigerweise umfassen die ersten Ausrichtmittel, die zumindest teilweise beweglich ausgebildet sind, wenigstens ein verfahrbares Ausrichtelement. Mit diesem lässt sich der Träger nach Erreichen der Bearbeitungsposition zum Ausrichten beaufschlagen und verschieben oder verkippen. Das Ausrichterelement weist zweckmäßigerweise Kontaktflächen auf, die bei Bewegung des Ausrichteelements relativ zum Träger mit diesem in Eingriff gelangen und bei weiterer Fortführung der Bewegung auf den Träger Kräfte ausüben, um diesen in die gewünschte Trägersollposition zu verschieben und/oder zu verkippen.

Die Bewegung der ersten Ausrichtmittel relativ zum Träger kann beispielsweise durch einen Linearantrieb oder andere, dem Fachmann bekannte elektromechanische Antriebsmittel erfolgen. Die Ausrichtung kann auch unter Nutzung der Bewegung des Trägers entlang des Förderweges geschehen, etwa indem der Träger durch seitliche Führungsmittel beaufschlagt wird, während er sich in die Bearbeitungsposition hinein bewegt. Die genaue Ausrichtung des Trägers in X-Richtung kann beispielsweise durch einen in den Förderweg hineinschwenkbaren Anschlag an der Bearbeitungsposition erreicht werden. Nach Erreichen des Anschlags ist der Träger aufgrund der seitlichen Führungsmittel auch in Y-Richtung genau positioniert. Eine alternative, nachfolgend bevorzugte Ausführungsform sieht dagegen vor, dass die ersten Ausrichtmittel erst dann mit dem Träger zusammenwirken, wenn dieser die Bearbeitungsposition erreicht hat und dort bereits verharrt. In diesem Fall ist die Bearbeitungsposition nur innerhalb grober Toleranzen definiert, und der Träger kann insbesondere in X-und in Y-Richtung noch verschoben werden.

Eine vorteilhafte Ausführungsform der Erfindung sieht vor, dass die ersten Ausrichtmittel wenigstens einen um eine Längsachse ausgebildeten Dorn umfassen, der zur Ausrichtung des Trägers gegen eine Führungsfläche am Träger, vorzugsweise in eine Ausnehmung oder in eine Öffnung bzw. Bohrung des Trägers hineinbewegbar ist. Der Dorn und die mit ihm zusammen wirkenden Führungsflächen am Träger sind so gestaltet, dass eine Bewegung des Dorn in einer ersten Richtung (insbesondere in einer zur X-Y-Ebene senkrechten Richtung Z) den Träger gleichzeitig in den beiden zur Z-Richtung senkrechten Richtungen X und Y ausrichtet. Dies kann vorteilhaft erreicht werden durch eine kegelförmige Spitze des Dorns, die in die Ausnehmung des Trägers eingeführt wird, wobei die Kegelfläche sich mit zunehmender Z-Höhe an die Kontaktflächen der Ausnehmung des Trägers bis zur Kontaktierung annähert, um daran anschließend horizontale Verschiebekräfte von der Kegelfläche des Dorns auf die Kontaktflächen des Trägers auszuüben und diesen entsprechend zu verschieben. Vorzugsweise ist der Dorn bezüglich seiner X-und Y-Position dabei ortsfest, während der Träger in der X-Y-Ebene, also auch relativ zur Fördereinrichtung, um das erforderliche Maß verschiedentlich und somit ausrichtbar ist. Mehrere, zueinander beanstandete Dorne oder vergleichbare Ausrichtelemente können die Ausrichtung des Trägers noch vereinfachen, da so auch eine bestimmte Drehlage in der X-Y-Ebene vorgebbar ist.

Erfindungsgemäß sind zweite Ausrichtmittel vorgesehen, um den Produkthalter relativ zum Träger in eine vorgebbare Produkthaltersolllage zu überführen (freizustellen), die zumindest hinsichtlich ihrer X- und Y-Position definiert ist. Damit ist es erfindungsgemäß möglich, nach vorheriger Ausrichtung des Trägers im Raum nun den Produkthalter vom Träger freizustellen, um den Wiegevorgang durchzuführen.

Während die ersten Ausrichtmitteln dazu dienen, den nicht mitzuwiegenden Träger der Fördereinrichtung für die spätere Freistellung des Produkthalters genau im Raum auszurichten, dienen die zweiten Ausrichtmitteln bevorzugt dazu, den Produkthalter relativ zum Träger freizustellen. Alternativ kann es jedoch auch genügen, lediglich die zweiten Ausrichtmittel für die vollständige Freistellung des Produkthalters im Träger zu betätigen, wenn die nur innerhalb grober Toleranzen vom Träger eingenommene Bearbeitungsposition jedenfalls dazu ausreicht, die Freistellung des Produkthalters vom Träger sicher zu bewirken.

Zweckmäßigerweise sind an dem Produkthalter Ausrichtflächen oder -konturen vorgesehen, die zur Wechselwirkung mit einer relativ zum Produkthalter bewegten Zentriereinheit ausgebildet sind. Zentriereinheit und Ausrichtungsflächen bilden gemeinsam die zweiten Ausrichtmittel. Die zweiten Ausrichtmittel können analog zu den ersten Ausrichtmitteln so ausgebildet sein, dass sich im Rahmen einer Relativbewegung zwischen Zentriereinheit und Produkthalter Kontaktflächen beider Komponenten einander annähern bzw. berühren, um insbesondere in der X-Y-Ebene Kräfte auf den Produkthalter auszuüben und ihn auszurichten. Bspw. könnte der Produkthalter an einer dem Träger zugewandten Seite mit konisch verlaufenden Flächen versehen sein, die mit geeigneten Führungsflächen oder -kanten des Trägers zusammenwirken und so den Produkthalter im Träger relativ zu diesem genau positionieren.

Alternativ ist es jedoch auch denkbar, die zweiten Ausrichtelemente lediglich als gegeneinander wirkende Anschlagelemente auszubilden, die dazu verwendet werden, den Produkthalter aus dem Träger herauszuheben. Ist der Produkthalter dabei so im Träger angeordnet, dass durch vertikales Herausheben des Produkthalters aus dem Träger zugleich eine mechanische Trennung des Produkthalters vom Träger erreicht wird, so genügt dies bereits zum Freistellen. Die Zentriereinheit dient in diesem Fall nicht zum Zentrieren (also zum horizontalen Ausrichten des Produkthalters relativ zur Zentriereinheit), sondern lediglich zum Anheben des Produkthalters in Z-Richtung, ohne dass die Position des Produkthalters im Raum in X-oder Y-Richtung verändert wird.

Eine vorteilhafte Ausführungsform der Erfindung sieht weiterhin vor, dass die Fördereinrichtung eine Wägezelle umfasst, die zur Gewichtserfassung eines mit Produkt beladenen oder unbeladenen, in der Bearbeitungsposition von seinem zugehörigen Träger freigestellten Produkthalters ausgebildet ist, wobei die Wägezelle einen die Zentriereinheit umfassenden Lasteinleitungsabschnitt zur Einleitung der zu wiegenden Last in die Wägezelle aufweist. Die Wägezelle hat die Aufgabe, die entlang des Förderweges transportierten Produkte zu wiegen. Dazu müssen die die Produkte aufnehmenden Produkthalter in der zuvor beschriebenen Weise freigestellt werden. Die zu ermittelnde Gewichtskraft wird vom Produkthalter in den Lasteinleitungsabschnitt der Wägezelle eingeleitet und über einen dem Fachmann bekannten Mechanismus innerhalb der Wägezelle in ein auswertbares Signal umgewandelt.

Vorzugsweise umfasst der Lasteinleitungsabschnitt die Zentriereinheit, mit welcher der Produkthalter relativ zum Träger freigestellt wird. Die Freistellung des Produkthalters erfolgt dann, indem zunächst der Träger durch die ersten Ausrichtmittel im Raum ausgerichtet wird. Im Rahmen dieser Ausrichtung wird der Träger (mit dem von ihm aufgenommenen Produkthalter) in der Bearbeitungsposition so ausgerichtet, dass der Produkthalter für den nachfolgenden Freistellungsvorgang so relativ zur Zentriereinheit positioniert wird, dass die Freistellung alleine mithilfe einer Relativbewegung zwischen Zentriereinheit und Produkthalter erfolgen kann. Dabei ist die Wägezelle mit ihrem die Zentriereinheit umfassende Lasteinleitungsabschnitt soweit verschieblich ausgebildet, dass die Gewichtskraft des Produkthalters kraftnebenschlussfrei in den Lasteinleitungsabschnitt eingeleitet (Freistellung) oder davon entkoppelt (der Produkthalter ruht auf dem Träger) wird.

Der Vorgang des Freistellens kann vorzugsweise so erfolgen, dass die Wägezelle mit ihrem Lasteinleitungsabschnitt und der daran angeordneten Zentriereinheit relativ zum Produkthalter auf diesen zubewegt wird, um den Produkthalter dadurch aufzunehmen und aus dem Träger herauszulösen. Zweckmäßigerweise ist die Wägezelle dazu an einer Hubvorrichtung angeordnet, sodass sie mit ihrem Lasteinleitungsabschnitt (vorzugsweise von unten) aufwärts gegen den Produkthalter verfahrbar ist, um diesen aus dem Träger herauszuheben. Im umgekehrten Bewegungsablauf senkt sich die Wägezelle wieder herab, sodass der Produkthalter wieder vom Träger aufgenommen wird. Sobald die Zentriereinheit ausreichend weit vom Produkthalter getrennt ist und erforderlichenfalls auch die ersten Ausrichtungsmittel vom Träger gelöst wurden, kann der Träger mitsamt Produkthalter entlang des Förderweges zur nächsten Bearbeitungsstation verfahren werden.

Alternativ könnte der Produkthalter auch auf eine im Wesentlichen ortsfeste Wägezelle abgesenkt werden. Dies hätte jedoch zur Folge, dass mit dem Produkthalter auch der diesen tragende Träger abgesenkt werden müsste, was konstruktiv schwierig, aber nicht unmöglich ist.

Nach einer vorteilhaften Ausführungsform der Erfindung ist die Fördereinrichtung so ausgebildet, dass die Freistellung bewirkt wird durch Ausrichtung des Trägers im Raum mittels erster Ausrichtelemente mit anschließender oder zeitlich überschneidender oder zeitgleicher Ausrichtung bzw. Freistellung des Produkthalters relativ zum Träger mittels der zweiten Ausrichtelemente. Eine besonders bevorzugte Ausführungsform sieht dabei vor, dass ein Teil der ersten Ausrichtelemente (insbesondere der vorgenannte Dorn) mit der Wägezelle starr oder weitgehend starr gekoppelt ist, so dass diese Ausrichtelemente durch vorzugsweise vertikales Verfahren der Wägezelle mit dem auszurichtenden Träger in Eingriff gelangen und diesen ausrichten bzw. in die Trägersollposition überführen. In diesem Fall sind sowohl Teile der ersten Ausrichtmittel (beispielsweise der Dorn), als auch Teile der zweiten Ausrichtmittel (nämlich die Zentriereinheit) an der Wägezelle angeordnet. Durch ein insbesondere vertikales Anheben oder Absenken der Wägezelle wirken somit die ersten Ausrichtmittelmit dem Träger zusammen, um diesen im Raum auszurichten, während gleichzeitig oder zeitversetzt die Zentriereinheit mit dem Produkthalter zusammenwirkt, um diesen aus dem Träger herauszuheben.

Die Ausrichtung des den Produkthalter tragenden Trägers im Raum bzw. relativ zur X-Y-Position der Wägezelle ist wichtig, um die Gewichtskraft des Produkthalters (mit oder ohne aufliegenden Produkten) beim späteren Freistellen genau und störungsfrei in den Lasteinleitungsabschnitt der Wägezelle einleiten zu können. Zur Vermeidung von Ecklasten wird daher angestrebt, den Lasteinleitungsabschnitt im Rahmen der Freistellbewegung gegen einen genau definierten Kopplungsabschnitt des Produkthalters zu bewegen. Durch die vorherige genaue Ausrichtung des Trägers mit den ersten Ausrichtmittel wird sichergestellt, dass der Lasteinleitungsabschnitt an dem vorgesehenen Kopplungsabschnitt mit dem Produkthalter zusammenwirkt und nicht etwa seitlich dazu beabstandet ist.

Die Kopplung des Produkthalters mit dem Lasteinleitungsabschnitt zum Zwecke des Freistellens erfolgt vorzugsweise so, dass der Produkthalter auf dem Lasteinleitungsabschnitt lediglich lose aufliegt. Durch vertikale Relativbewegung zwischen Lasteinleitungsabschnitt und Produkthalter lassen sich dann diese beiden Komponenten zur Übertragung der Gewichtskraft miteinander koppeln bzw. zur Lösung der Gewichtskraft voneinander entkoppeln.

Eine besonders bevorzugte Ausführungsform der Vorrichtung sieht vor, dass die Ausrichtung des Trägers im Raum und die Freistellung des Produkthalters relativ zum Träger im Rahmen einer (vorzugsweise kontinuierlichen) Relativbewegung zwischen Wägezelle und Träger erreicht wird. Dabei kann die Wägezelle mit einem Teil der an ihr befestigten oder gemeinsam mit ihr bewegten ersten Ausrichtmittel, bevorzugt mit einem Dorn, von unten in Z-Richtung auf einen in einer Bearbeitungsposition angeordneten Träger zubewegt werden. Dieser Teil der ersten Ausrichtmittel gelangt bei der Aufwärtsbewegung in Kontakt mit weiteren Teilen der ersten Ausrichtmittel, die am Träger angeordnet sind. Im Rahmen der Aufwärtsbewegung wird der Träger durch diesen Kontakt relativ zur Wägezelle in X-und Y-Richtung ausgerichtet. Bevorzugt ist als Teil der Ausrichtmittel an der Wägezelle ein Dorn befestigt, der in eine im Träger ausgebildete Ausnehmung eingreifen kann, sodass der Träger in der vorstehend beschriebenen Weise relativ zur Wägezelle und damit im Raum ausgerichtet wird.

In der weiteren Aufwärtsbewegung gleitet der Dorn ohne zusätzliche Wechselwirkung mit dem Träger durch die genannte Ausnehmung weiter aufwärts, während sich die am Lasteinleitungsabschnitt der Wägezelle angeordnete Zentriereinheit von unten auf den im Träger angeordneten Produkthalter zubewegt. Die Zentriereinheit untergreift den Produkthalter und richtet diesen in der weiteren Aufwärtsbewegung der Wägezelle (erforderlichenfalls mithilfe geeigneter Führungsflächen) relativ zum Träger so aus, dass der Produkthalter aus dem Träger herausgehoben und von ihm freigestellt wird. Da die Ausrichtung des Trägers und anschließend die Freistellung des Produkthalters im Rahmen einer einzigen Bewegung der Wägezelle relativ zum Träger erfolgen kann, kann das in die Bearbeitungsstation überbrachte Produkt zügig gewogen werden. Auch die Freigabe des Produkts zum Weitertransport, also das Absenken der Wägezelle zum Wiedereinsetzung des Produkthalters in den Träger und die anschließende Freigabe des Trägers (Entkopplung der ersten Ausrichtmittel), kann über eine einzige, diesmal entgegengesetzte Relativbewegung zwischen Wägezelle und Träger erfolgen und den Bearbeitungsprozess vorteilhaft beschleunigen.

Die Relativbewegung zwischen Wägezelle und Träger erfolgt vorzugsweise linear, also entlang eines geraden Weges. Bei geeigneter Gestaltung der ersten und zweiten Ausrichtelemente ist jedoch auch ein gekrümmter oder in sonstiger Weise geeigneter räumlicher Weg denkbar, entlang dessen die Wägezelle relativ zum Träger bewegt wird, um die Ausrichtung und Freistellung zu bewirken.

Nach einer vorteilhaften Ausführungsform umfasst die Fördereinrichtung mehrere Träger, wobei jeder Träger ein oder mehrere Produkthalter aufnehmen kann. Bevorzugt sind die Träger und/oder ihre Produkthalter mit einer Kennung versehen sind, aus der bspw. die geometrischen Eigenschaften des jeweiligen Trägers bzw. Produkthalters herleitbar sind, beispielsweise über eine Steuereinheit mit Zugriff auf eine Datenbank. Wird die Kennung der Träger bzw. Produkthalter durch geeignete Sensoren entlang der Förderstrecke automatisch ausgelesen, so lässt sich ein automatisierter Ausrichtungsvorgang darauf einstellen. Dies kann beispielsweise den gewünschten Hub der Wägezelle bzw. eines Pneumatikzylinders oder eines Linearantriebs betreffen, um je nach konstruktiver Gestaltung des Trägers oder des Produkthalters die erforderliche Hubhöhe zum Ausrichten bzw. Freistellen festlegen zu können.

Nach einer vorteilhaften Ausführungsform der Erfindung sind mehrere Träger gemeinsam entlang des Förderweges bewegbar. Dadurch lassen sich mehrere Produkthalter, die jeweils einem der Träger zugeordnet sind, gleichzeitig transportieren, was den Durchsatz der Anlage erhöht. Durch geeignete Anordnung mehrerer Wägezellen in einer zum Wiegen eingerichteten Bearbeitungsstation können so auch gleichzeitig mehrere Produkthalter (mit oder ohne aufliegendes Produkt) gewogen werden. Die für einen Träger vorstehend beschriebenen Merkmale gelten dann entsprechend auch für die anderen Träger. Gelangen die Träger in eine zum Wiegen ausgebildete Bearbeitungsstation, dann ist dort vorzugsweise für jeden Träger oder zumindest für jeden Produkthalter eine eigene Wägezelle mit Lasteinleitungselement vorgesehen, sodass jede Wägezelle das Gewicht des Produkthalters eines der Träger erfassen kann.

Die Relativbewegung zwischen jeweiligem Produkthalter und Lasteinleitungselement bzw. Wägezelle kann erfolgen, indem die Wägezellen gemeinsam auf-oder ab bewegt werden relativ zu den mehreren Produkthaltern in den einzelnen Trägern. Alternativ kann jedoch auch eine individuelle Relativbewegung zwischen jeweiliger Wägezelle und zugehörigem Träger bzw. Produkthalter erfolgen, was die Flexibilität der Verfahrensführung innerhalb der Bearbeitungsstation erhöht.

Vorzugsweise sind mehrere gemeinsam bewegte Träger in Förderrichtung oder quer dazu nebeneinanderliegend oder in Matrixform in einer Zeilen-und-Spalten-Matrix angeordnet. Auf vergleichsweise engem Raum lassen sich so mehrere Produkthalter schnell wiegen.

Die verschiedenen Träger der Fördereinrichtung und/oder deren Produkthalter sind nach einer vorteilhaften Ausführungsform der Erfindung jeweils mit einer eindeutigen Kennung versehen. Diese Kennung soll es möglich machen, den Träger und/oder den Produkthalter zu identifizieren und zu individualisieren. Dadurch können bestimmte Eigenschaften des Trägers und/oder des Produkthalters erfasst und beispielsweise einer übergeordneten Steuerung übermittelt werden, um diese beim Betrieb der Fördereinrichtung zu berücksichtigen. Dies kann beispielsweise das Leergewicht (Tara) betreffen. Jeder Produkthalter hat ein solches individuelles Leergewicht, welches beim Wiegen zu berücksichtigen ist. Die individuelle Kennung ermöglicht es, das Leergewicht des jeweiligen Produkthalters dafür zu ermitteln. Das Leergewicht kann unmittelbar in der Kennung selbst enthalten sein oder mithilfe der Kennung aus einer Datenbank ermittelt werden, welche den Zusammenhang zwischen der Kennung und dem Leergewicht herstellt.

Bei der Kennung kann es sich um unveränderliche Kennzeichnungsmittel handeln, wie bspw. einen Barcode oder eine Nummer oder eine feste RFID-Kennung. Alternativ oder ergänzend kann die Kennung auch veränderlich sein, etwa um bestimmte, möglicherweise auch veränderliche Eigenschaften des Trägers oder Produkthalters unmittelbar in der Kennung zu hinterlegen. Bspw. könnte ein Code für das Leergewicht eines Produkthalters in einem am Produkthalter angeordneten Speicher als Kennung oder Teil einer Kennung hinterlegt werden. Wird die Kennung im Verfahren ausgelesen, so erhält eine das Verfahren steuernde Steuereinheit unmittelbar aus der Kennung Angaben über das Leergewicht des Produkthalters, um dieses beim Wiegen zu berücksichtigen.

Veränderbare Kennungen haben den Vorteil, dass sie Änderungen des Trägers oder des Produkthalters unmittelbar an der Komponente selbst dokumentieren, ohne dass hierfür eine spezielle Datenbank bearbeitet werden müsste. Wird bspw. das Leergewicht eines (dann unbeladenen) Produkthalters durch einen oder mehrere Wiegevorgänge bestimmt, so kann ein diesen Wert repräsentierender Code unmittelbar in die veränderliche Kennung am Produkthalter geschrieben werden. Im Rahmen eines regulären Wiegeverfahrens mit auf dem Produkthalter aufliegendem Produkt kann durch Auslesen der Kennung das Leergewicht ermittelt und von dem durch die Wägezelle ermittelten Gesamtgewicht abgezogen werden, um das Produktgewicht (netto) zu erhalten.

Alternativ kann das Leergewicht natürlich auch in einer Datenbank hinterlegt werden, aus der die Steuereinheit über die am Produkthalter identifizierte Kennung das Leergewicht zuordnet. Beliebige andere Eigenschaften eines Trägers oder Produkthalters (geometrische Abmessungen, Materialeigenschaften, Zeit- oder Ortsangaben etc.) sind ebenfalls unmittelbar in der Kennung oder einer Datenbank hinterlegbar, welche die Eigenschaften der Kennung zuordnen.

Denkbar ist es ferner, die Eigenschaften mehrerer Träger und/oder Produkthalter einer gemeinsamen Kennung zuzuordnen, etwa wenn mehrere Träger zu einer Gruppe gekoppelt sind und gemeinsam entlang der Förderstrecke bewegt werden. Dann könnten Eigenschaften der einzelnen Träger und/oder des zu jedem Träger gehörenden Produkthalters in der gemeinsamen Kennung hinterlegt oder dieser zugeordnet sein. Anhand der Kennung soll dann eine Unterscheidung zwischen den einzelnen Trägern bzw. Produkthaltern möglich sein, um die Eigenschaft eines bestimmten Produkthalters oder Trägers innerhalb der Gruppe aus der Kennung auslesen oder herleiten zu können. So könnte eine bspw. aus vier Trägern mit jeweils einem Produkthalter gebildete Gruppe einen gemeinsamen, beschreibbaren RFID-Chip aufweisen. In den Chip sind Daten für jeden Träger und/oder Produkthalter hinterlegbar. Das Auslesen und das Beschreiben eines solchen Speichers werden dann vereinfacht, da nur eine Kennung für alle vier Träger bzw. Produkthalter ausgelesen werden muss. Nur eine Leseeinheit bzw. Beschreibeinheit muss dann vorgesehen werden, um für alle vier Träger oder Produkthalter Daten für eine Steuereinheit auszulesen oder in dem Speicher des RFID -Chips zu hinterlegen. Andere auslesbare und/oder beschreibbare, dem Fachmann hinlänglich bekannte Kennzeichnungsmittel sind ebenfalls denkbar, um einen oder mehrere Träger bzw. Produkthalter zu kennzeichnen und die Zuordnung spezieller Eigenschaften zu ermöglichen.

Vorzugsweise ist das Material des Produkthalters zur Röntgendurchstrahlung geeignet. Dann kann der Produkthalter und ein auf dem Produkthalter aufliegendes Produkt mittels Röntgenstrahlen durchstrahlt werden, um darin eventuell enthaltene Fremdkörper detektieren zu können. Auch die Möglichkeit zur Erfassung einer Füllmenge eines Produktes ist dann gegeben, wenn die Intensität der Röntgenstrahlung von der Füllhöhe beeinflusst wird, etwa bei einem auf dem Produkthalter aufliegenden, gefüllten Joghurtbecher. Generell soll der durchstrahlbare Produkthalter es ermöglichen, Füllmengen, Füllhöhen oder Nennfüllmengen mit Hilfe von Röntgendurchstrahlung zu erfassen. Überwachungen des Füllgrads oder Untersuchungen auf möglicherweise im Produkt enthaltene Fremdkörper können in einer entlang der Förderstrecke angeordneten Röntgeninspektionseinheit durchgeführt werden, die stromauf- oder stromabwärts einer als Wägestation ausgebildeten Bearbeitungsstation angeordnet sein kann.

Vorzugsweise umfasst eine erfindungsgemäße Fördereinrichtung wenigstens eine Wägestation mit wenigstens einer Wägezelle, um in der zuvor beschriebenen Weise Gewichtskräfte zu erfassen.

Das Verfahren zum Freistellen eines Produkthalters in der zuvor beschriebenen Vorrichtung umfasst mindestens folgende Schritte:
a) Bewegen eines Trägers mit darin aufgenommenem Produkthalter in die Bearbeitungsposition,
b) Ausrichten der Trägers mittels erster Ausrichtmittel in eine Trägersolllage,
c) Relativbewegen (Freistellen) des Produkthalters und des Trägers zueinander, um den Produkthalter vom Träger zu lösen und die Gewichtskraft des mit Produkt beladenen oder unbeladenen Produkthalters in den Lasteinleitungsabschnitt einer Wägezelle einzuleiten.

Vorzugsweise erreicht der Träger die Bearbeitungsposition in einer im Wesentlichen horizontalen Bewegung (X-Y-Ebene). Dies schließt jedoch nicht aus, dass diese Bewegung auch eine Z-Komponenten umfasst, etwa wenn der Förderweg aufwärts oder abwärts gerichtet ist. In der Bearbeitungsposition, in der der leere oder ein Produkt tragende Produkthalter gewogen werden soll, ruht der Träger, bezogen auf seine X-und Y- Koordinaten, im Wesentlichen ortsfest. Geringe Verschiebemöglichkeiten in X-und/oder Y-Richtung bestehen dennoch, um den Träger mithilfe der ersten Ausrichtmittel bezüglich seiner gewünschten X-Y-Position genau in der vorgebbaren Trägersolllage positionieren zu können.

Die Freistellung des Produkthalters relativ zum Träger erfolgt vorzugsweise senkrecht zur X-Y-Ebene durch Herausheben des Produkthalters aus dem Träger. Sie kann der Positionierung des Trägers in der Trägersolllage nachgeschaltet sein. Vorzugsweise überschneiden sich beide Positionierungsvorgänge jedoch, um Zeit zu sparen. Dabei kann die Freistellung des Produkthalters relativ zum Träger sogar bereits abgeschlossen sein, während der Träger noch durch die ersten Ausrichtmittel in die Trägersolllage überführt wird. Denkbar ist es auch, die zweiten Ausrichtmittel am bzw. mit dem Produkthalter bereits in Eingriff zu bringen noch bevor die ersten Ausrichtmittel miteinander wechselwirken. Entsprechend könnte der Produkthalter bereits um ein Maß aus dem Träger herausgehoben werden bevor der Träger seinerseits ausgerichtet wird. Die Freistellung des Produkthalters erfolgt dann spätestens im Rahmen der Überführung des Trägers in die Trägersolllage, da hierdurch die Positionierung des Trägers in X-Y Richtung den ausreichenden seitlichen Abstand zum Produkthalter für ein kraftnebenschlussfreies Wiegen herstellt.

Vorzugsweise erfolgt die Ausrichtung des Trägers und die Freistellung des Produkthalters innerhalb einer kontinuierlichen Relativbewegung zwischen Wägezelle einerseits und Träger bzw. Produkthalter andererseits, höchst vorzugsweise im Rahmen einer rein vertikalen und/oder geraden Aufwärtsbewegung der Wägezelle (auch zu den Raumachsen X, Y geneigte Relativbewegungen können durch Ausbildung geeigneter Ausrichtelemente die Ausrichtung des Trägers bzw. die Freistellung des Produkthalters ermöglichen).

Dabei an der Wägezelle angeordnete erste Ausrichtelemente, wie beispielsweise ein vertikaler Dorn, können im Rahmen dieser Bewegung in eine dafür vorgesehene Ausnehmung des Trägers eingreifen und durch geeignete Kontaktflächen die horizontale Ausrichtung des Trägers bewirken. Am Lasteinleitungsabschnitt der Wägezelle angeordnete zweite Ausrichtelemente wirken im Rahmen der Aufwärtsbewegung mit geeigneten Kontaktflächen am Produkthalter zusammen, um diesen relativ zum Träger auszurichten und so die Freistellung innerhalb einer einzigen Bewegung der Wägezelle erreichen zu können.

Nach der Freistellung des Produkthalters vom Träger ruht der Produkthalter ausschließlich auf dem Lasteinleitungsabschnitt der Wägezelle, so dass das Gewicht des Produkthalters erfasst werden kann. Durch Umkehrung der Freistellbewegung gelangt der Produkthalter wieder in Eingriff mit dem Träger und kann - nach Lösen eventuell noch bestehender Kopplungen von ersten oder zweiten Ausrichtelementen - in Fördererrichtung weiterbewegt werden, um einen nachfolgenden Träger in die Bearbeitungsposition überführen zu können.

Nachfolgend soll die erfindungsgemäße Vorrichtung anhand von Figurenbeispielen näher erläutert werden. Dabei zeigen
- Fig. 1: eine erfindungsgemäße Vorrichtung mit Träger in der Bearbeitungsposition;
- Fig. 2 bis Fig. 5: die Vorrichtung gemäß Figur 1 während des Ausrichtens und Freistellens.

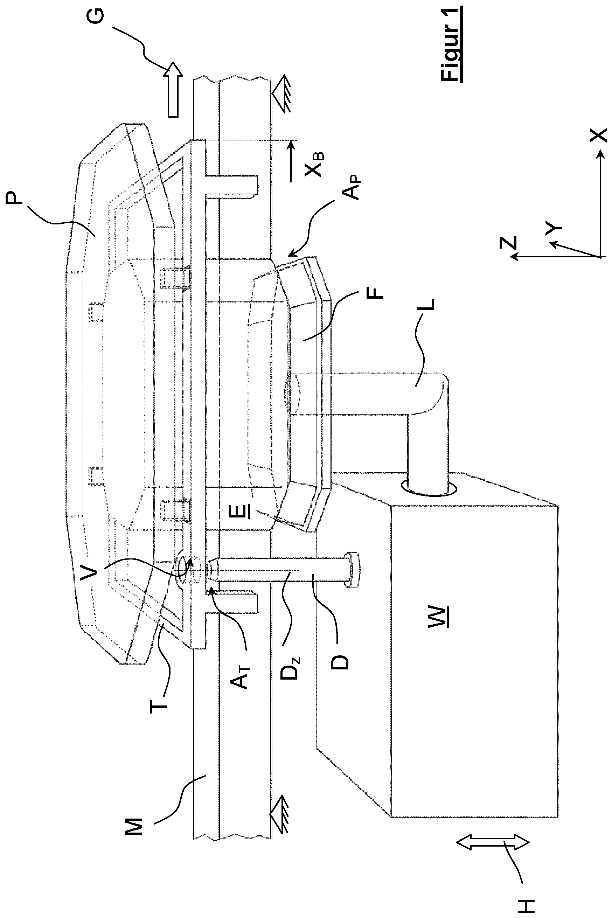

Figur 1 zeigt in einer vereinfachten perspektivischen Ansicht die wesentlichen Komponenten einer erfindungsgemäßen Fördereinrichtung. Entlang eines als Schiene ausgebildeten, ortsfesten Förderelements M ist ein Träger T in einer Förderrichtung G beweglich. Der Träger T trägt einen Produkthalter P, auf welchem nicht näher dargestellte Produkte (einzeln oder in Gruppen) aufliegen können, um sie entlang einer Fertigungsstraße zu bewegen. Der Produkthalter P ist in Z-Richtung nach oben aus dem Träger T heraushebbar. Nicht näher dargestellt sind angetriebene Förderglieder (beispielsweise Mitnehmer, Kettenglieder oder Haken), die den Träger T entlang des Fördererelements M verschieben können.

Unterhalb des Fördererelements M ist eine schematisch dargestellte Wägezelle W angeordnet. Die Wägezelle W umfasst einen abgewinkelten Lasteinleitungsabschnitt L, der seinerseits eine Zentriereinheit F trägt, welche im Wesentlichen unterhalb des Fußes E des Produkthalters P positioniert ist. Über den Lasteinleitungsabschnitt kann das Gewicht des Produkthalters P in einen nicht näher dargestellten Wägemechanismus in der Wägezelle W eingeleitet werden, um daraus ein auswertbares Wägesignal zu erzeugen. Alle dem Fachmann bekannten Wägemechanismen, auch unabhängig von den vorliegenden Figurenbeispielen, können zur Erzeugung des Wägesignals verwendet werden, wobei insbesondere das Verfahren der elektromagnetischen Kraftkompensation genannt sein soll.

Die Wägezelle W ist über einen nicht näher dargestellten Hubmechanismus in einer Hubrichtung H auf- und abwärts und damit relativ zum Förderelement M bewegbar. In diesem Ausführungsbeispiel fällt die Hubrichtung H mit der vertikalen Z-Achse zusammen.

Entlang des Förderelements M hat der Träger T in Figur 1 eine Bearbeitungsposition X_{B} erreicht und ruht dort zunächst. Innerhalb dieser Bearbeitungsposition X_{B} muss der Träger T in eine Trägersolllage überführt werden, die insbesondere durch ihre X- und Y-Koordinaten genau vorgebbar. Dies ist erforderlich, um die Freistellung des Produkthalters P vom Träger T sicherstellen zu können. Die Vorrichtung verfügt dazu über erste Ausrichtmittel A_{T}, die zum Teil am Träger T und zum Teil an der Wägezelle W ausgebildet sind. Der Träger T umfasst dafür eine Ausrichtöffnung V in Form einer Bohrung, deren Achse in Z-Richtung verläuft. Unterhalb des in der Bearbeitungsposition angeordneten Trägers und auf der Oberseite der Wägezelle W ist ein zylinderförmiger Dorn D um eine Achse D_{Z} ausgebildet, welche sich ebenfalls in Z-Richtung erstreckt. Der Außendurchmesser des Dorns D ist geringfügig kleiner gewählt als der Innendurchmesser der Ausrichteröffnung V. An seinem oberen Ende ist der Dorn D mit einem konischen Abschnitt versehen, der das Einfädeln in die Ausrichtungsöffnung V erleichtert und zugleich die Ausrichtung des Trägers T relativ zum Dorn in der X-Y Ebene bewirkt.

Die Zentriereinheit F weist im vorliegenden Beispiel an ihrem oberen Ende einen Pyramidenabschnitt auf mit konisch zulaufenden Außenflächen. Diese sind Teil von zweiten Ausrichtmittel A_{P}, mit denen der Produkthalter P vom Träger T freigestellt wird. Der Fuß E des Produkthalters P ist unten offen und mit nicht näher dargestellten Innenflächen ausgestaltet, welche ebenfalls zu den zweiten Ausrichtmitteln A_{P} gehören. Durch Anheben der Zentriereinheit F von unten in den Fuß E des Produkthalters P gelangen die Innenflächen des Fußes in Kontakt mit dem Pyramidenabschnitt, wodurch der Fuß zunächst in horizontaler Richtung (X-Y-Ebene) relativ zur Zentriereinheit F und damit zur Wägezelle W ausgerichtet wird. Bei fortgesetzter Aufwärtsbewegung der Zentriereinheit F untergreift diese den Fuß E schließlich formschlüssig. Eine weitere Bewegung des Produkthalters P relativ zur Zentriereinheit F ist dann nicht mehr möglich und der Produkthalter P wird von der mit der Wägezelle weiter angehobenen Zentriereinheit aus dem Träger T herausgehoben.

Die räumliche Anordnung der Wägezelle W mit dem Dorn D und der Zentriereinheit F ist so gewählt, dass in einer im Wesentlichen geraden, vorzugsweise kontinuierlichen Aufwärtsbewegung der Wägezelle W zunächst der Träger T über den Dorn D ausgerichtet wird und im weiteren der Produkthalter P so aus dem Träger T herausgehoben wird, dass der Produkthalter P kraftnebenschlussfrei auf dem Lasteinleitungsabschnitt L aufliegt und damit sein volles Gewicht in die Wägezelle W einleitet. Die Anordnung des Dorns D und der Zentriereinheit F zueinander bestimmt somit auch die Position des Trägers T relativ zum Produkthalter P im Moment der Freistellung. In den nachfolgenden Figuren wird die Ausrichtung bzw. Freistellung mit schematischen Seitenansichten verdeutlicht.

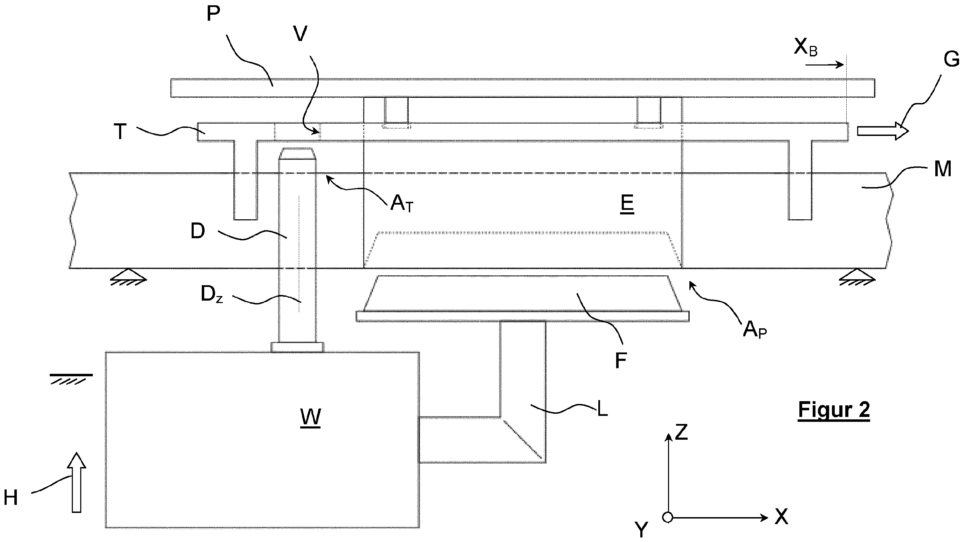

Figur 2 zeigt, wie die Wägezelle W in Richtung H relativ zum Förderelement M mit dem darauf ruhenden Träger T und dem wiederum darauf ruhenden Produkthalter P angehoben wird. Der Dorn D ist kurz davor, in die Ausrichtungsöffnung V des Trägers T einzugreifen. Die Zentriereinheit F hat noch keinen Kontakt zum Fuß E des Produkthalters P.

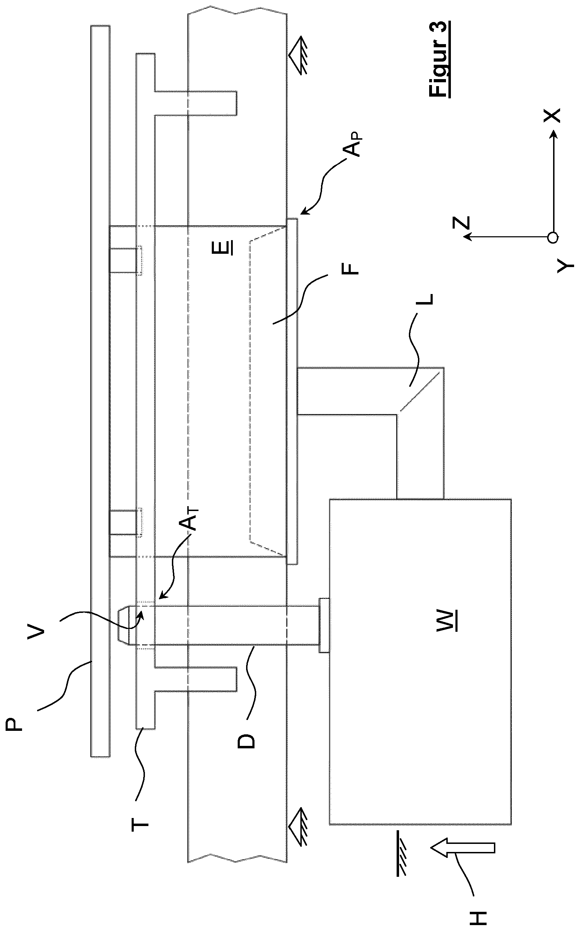

In Figur 3 ist zu sehen, wie die Wägezelle weiter aufwärts bewegt wurde, wobei der Dorn D in die Ausrichtungsöffnung V und durch diese hindurchgeschoben wurde. Dadurch hat der Träger T relativ zum Dorn D bzw. zur Wägezelle W und damit auch relativ zur Zentriereinheit F eine genau definierte X-Y Position eingenommen. Die Zentriereinheit F ist währenddessen von unten mit den Innenseiten des Fußes E des Produkthalters P in Kontakt gelangt, wodurch auch der Produkthalter P relativ zur Wägezelle W eine genau vorgegebene X-Y Position eingenommen hat. Noch allerdings ruht der Produkthalter P zumindest vom Teil auf dem Träger T.

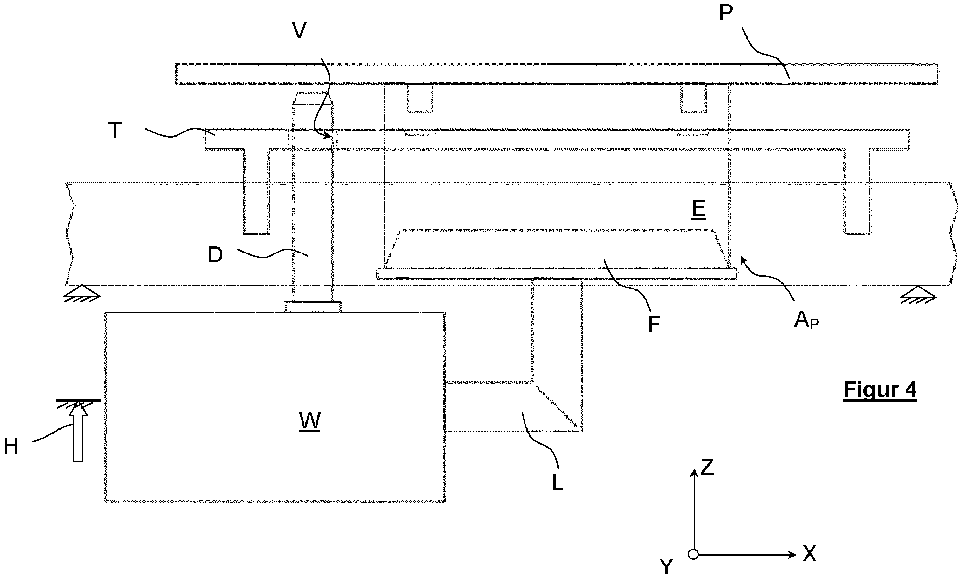

Figur 4 zeigt, dass die Waage W in Höhenrichtung H vollständig angehoben wurde. Der Dorn D ist dabei weiter durch die Ausrichtungsöffnung V hindurchgeschoben worden, ohne dabei die X-Y-Position des Trägers weiter zu verändern. Die Zentriereinheit F hat währenddessen den Fuß E des Produkthalters P vollständig untergriffen und den Produkthalter P aus dem Träger T herausgehoben. Damit ruht der Produkthalter P ausschließlich auf dem Lasteinleitungsabschnitt L der Wägezelle W, sodass das Gewicht des Produkthalters (mit oder ohne aufliegendem Produkt) von der Wägezelle erfasst werden kann. Der Träger T ist während des Wiegevorgangs in horizontaler Richtung durch den Dorn D gesichert, sodass bei der darauffolgenden Abwärtsbewegung der Wägezelle W (nicht näher dargestellt) der Produkthalter P wieder in den Träger T eingesetzt werden kann, um ihn weiter zu transportieren.

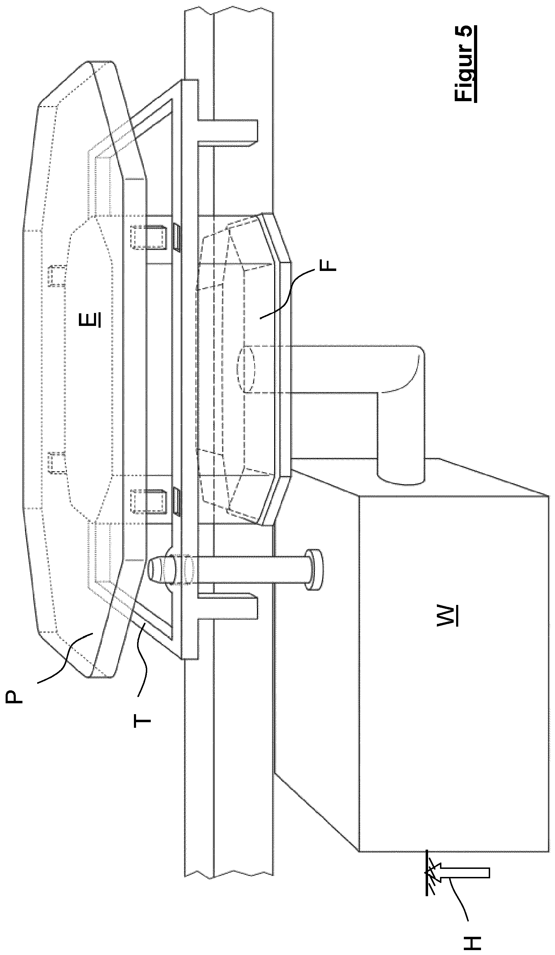

Figur 5 zeigt den Zustand gemäß Figur 4 in vereinfachter perspektivischer Ansicht.

### Bezugszeichenliste

- Aₚ: Zweite Ausrichtmittel
- A_{T}: Erste Ausrichtmittel
- D: Dorn
- D_{z}: Achse des Dorns
- E: Fuß des Produkthalters P
- F: Zentriereinheit
- G: Förderrichtung
- H: Höhenrichtung
- L: Lasteinleitungsabschnitt
- M: Förderelement
- P: Produkthalter
- T: Träger
- V: Ausrichtöffnung
- W: Wägezelle
- X, Y, Z: Raumkoordinaten
- X_{B}: Bearbeitungsposition

## Patentansprüche

1. Fördereinrichtung zum Transportieren von Produkten,
a) umfassend wenigstens einen Träger (T), welcher wenigstens einem Produkt zugeordnet und zur Aufnahme eines Produkthalters (P) ausgebildet ist,
b) ferner umfassend wenigstens ein Förderelement (M), mit dem der Träger (T) koppelbar ist und der entlang eines Förderweges bewegbar ist,
c) wobei sich die Fördereinrichtung in einer horizontalen Förderrichtung (X), einer dazu rechtwinkligen, ebenfalls, horizontalen Querrichtung (Y) und einer zu beiden Richtungen (X, Y) senkrecht verlaufenden Höhenrichtung (Z) erstreckt, und
d) wobei der Träger (T) und ein von ihm aufgenommener Produkthalter (P) in eine Bearbeitungsposition (X_{B}) entlang des Förderwegs bewegbar ist, die zumindest hinsichtlich ihrer X- und Y-Position innerhalb vorgebbarer Toleranzen definiert ist,
e) wobei erste bewegliche Ausrichtmittel (A_{T}) vorgesehen sind, um den in der Bearbeitungsposition (X_{B}) eintreffenden Träger (T) relativ zum Förderelement (M) oder einer ortsfesten Komponente der Fördereinrichtung in X- und/oder Y-Richtung auszurichten und dadurch in eine vorgebbarer Trägersolllage zu überführen,
**dadurch gekennzeichnet,**
f) **dass** zweite Ausrichtmittel (AP) vorgesehen sind, mit denen der Produkthalter (P) relativ zum Träger (T) in eine vorgebbare Produkthaltersolllage überführbar ist, die zumindest hinsichtlich ihrer X- und Y-Position definiert ist.

2. Fördereinrichtung nach Anspruch 1, **dadurch gekennzeichnet, dass** die ersten Ausrichtmittel (A_{T}) wenigstens ein verfahrbares Ausrichtelement umfassen, mit dem der Träger (T) nach Erreichen der Bearbeitungsposition zum Ausrichten beaufschlagbar ist, um ihn durch das Ausrichtelement in die Trägersolllage zu verschieben.

3. Fördereinrichtung nach Anspruch 1 oder 2, **dadurch gekennzeichnet, dass** die ersten Ausrichtmittel (A_{T}) wenigstens einen um eine Längsachse (Dz) ausgebildeten Dorn (D) umfassen, der zur Ausrichtung des Trägers (T) in eine Ausrichtöffnung (V) des Trägers (T) und/oder gegen Führungsflächen des Trägers (T) bewegbar ist, um den Träger (T) durch Bewegung relativ zum Dorn (D) und Kontakt mit ihm auszurichten.

4. Fördereinrichtung nach dem vorhergehenden Anspruch, **dadurch gekennzeichnet, dass** der wenigstens eine Dorn (D) bezüglich seiner X- und Y-Position im Raum ortsfest ist, während der in der Bearbeitungsposition angeordnete Träger (T) in X- und/oder Y-Richtung innerhalb vorgebbarer Toleranzen beweglich und daher ausrichtbar ist.

5. Fördereinrichtung nach dem vorhergehenden Anspruch, **dadurch gekennzeichnet, dass** die zweiten Ausrichtmittel (A_{P}) Ausrichtflächen oder -konturen an dem Produkthalter (P) aufweisen, die zur Wechselwirkung mit einer relativ zum Produkthalter (P) bewegten Zentriereinheit (F) ausgebildet sind.

6. Fördereinrichtung nach einem der vorigen Ansprüche, ferner umfassend wenigstens eine Wägezelle (W), die zur Gewichtserfassung eines mit Produkt beladenen oder unbeladenen, in der Bearbeitungsposition von seinem zugehörigen Träger (T) freigestellten Produkthalters (P) ausgebildet ist, wobei die Wägezelle (W) einen die Zentriereinheit (F) umfassenden Lasteinleitungsabschnitt (L) zur Einleitung der zu wiegenden Last in die Wägezelle (W) aufweist.

7. Fördereinrichtung nach Anspruch 6, **dadurch gekennzeichnet, dass** der Lasteinleitungsabschnitt relativ zum Produkthalter (P) - vorzugsweise in Z-Richtung - so weit verschieblich ist, dass die Gewichtskraft des Produkthalters (P) in den Lasteinleitungsabschnitt wahlweise eingeleitet oder davon entkoppelt wird.

8. Fördereinrichtung nach Anspruch 6 oder 7, **dadurch gekennzeichnet, dass** die Fördereinrichtung ausgebildet ist zum Freistellen des Produkthalters (P) relativ zu dem ihm zugeordneten Träger (T),
a) indem der Träger (T) mittels der ersten Ausrichtmitteln (A_{T}) positionierbar ist, und
b) indem der Produkthalter (P) und der Träger (T) relativ zueinander über einen Hubmechanismus in einer Relativbewegung (H) so in Z-Richtung bewegbar sind, dass Produkthalter (P) und Träger (T) kraftübertragungsfrei voneinander getrennt sind und die Gewichtskraft des Produkthalters (P) vom Lasteinleitungsabschnitt der Wägezelle (W) aufgenommen wird.

9. Fördereinrichtung nach dem vorhergehenden Anspruch, **dadurch gekennzeichnet, dass** die vorzugsweise als Dorn (D) ausgebildeten ersten Ausrichtmittel (A_{T}) so mit der Wägezelle (W) gekoppelt sind, dass sie gemeinsam mit der Wägezelle (W) - vorzugsweise in Z-Richtung - bewegbar sind.

10. Fördereinrichtung nach einem der beiden vorhergehenden Ansprüche, **dadurch gekennzeichnet, dass** die Ausrichtung des Trägers (T) bzw. die Freistellung des Produkthalters (P) im Rahmen einer vorzugsweise kontinuierlichen Relativbewegung zwischen Wägezelle (W) und Träger (T) bzw. Produkthalter (P) durchführbar ist, vorzugsweise in einer geraden Hubbewegung der Wägezelle relativ zu dem im Wesentlichen ortsfesten Träger (T).

11. Fördereinrichtung nach einem der vorhergehenden Ansprüche, umfassend mehrere Träger und/oder Produkthalter, wobei mehrere Träger jeweils einzeln oder gemeinsam durch ein Förderelement (M) entlang des Förderweges bewegbar sind, und wobei die Träger dabei insbesondere in Förderrichtung oder quer dazu nebeneinanderliegend oder in Matrixform in einer Zeilen-und-Spalten-Matrix angeordnet sein können.

12. Fördereinrichtung nach einem der vorigen Ansprüche, **dadurch gekennzeichnet, dass** unterschiedliche Träger und/oder Produkthalter jeweils mit einer eindeutigen, vorzugsweise maschinenlesbaren Kennung versehen sind, über die dem jeweiligen Träger bzw. Produkthalter individuelle Daten zuordenbar sind.

13. Fördereinrichtung nach einem der vorhergehenden Ansprüche, **dadurch gekennzeichnet, dass** das Material des Produkthalters (P) aufgrund geringer Absorption von Röntgenstrahlen zur Röntgendurchstrahlung geeignet ist derart, dass mittels Röntgendurchstrahlung des Produkthalters (P) und eines auf dem Produkthalter (P) aufliegenden Produktes im Produkt enthaltene Fremdkörper und/oder Füllmengen des Produkts detektierbar sind.

14. Wägestation mit einer Fördereinrichtung nach einem der vorigen Ansprüche, wobei die Fördereinrichtung eine Wägezelle umfasst, die zur Gewichtserfassung eines mit Produkt beladenen oder unbeladenen, in der Bearbeitungsposition von seinem zugehörigen Träger (T) freigestellten Produkthalters (P) ausgebildet ist, wobei die Wägezelle einen eine Zentriereinheit umfassenden Lasteinleitungsabschnitt zur Einleitung der zu wiegenden Last in die Wägezelle aufweist.

15. Verfahren zum Freistellen eines Produkthalters (P) in einer Vorrichtung nach einem der Vorrichtungsansprüche 1 bis 14, umfassend folgende Schritte:
a) Bewegen eines Trägers (T) mit darin aufgenommenem Produkthalter (P) in die Bearbeitungsposition (X_{B}),
b) Ausrichten der Trägers (T) mittels erster Ausrichtmittel (A_{T}) in eine Trägersolllage,
c) Relativbewegen des Produkthalters (P) und des Trägers (T) zueinander mithilfe zweiter Ausrichtmittel (AP), um den Produkthalter (P) relativ zum Träger (T) in eine vorgebbare und zumindest hinsichtlich ihrer X- und Y-Position definierte Produkthaltersolllage zu überführen (freizustellen), und um den Produkthalter (P) vom Träger (T) zu lösen und die Gewichtskraft des mit Produkt beladenen oder unbeladenen Produkthalters (P) in den Lasteinleitungsabschnitt (L) einer Wägezelle (W) einzuleiten.

16. Verfahren nach dem vorhergehenden Anspruch, **dadurch gekennzeichnet, dass** der Produkthalter (P) über zweite Ausrichtmittel (A_{P}) in eine Produkthaltersolllage ausgerichtet wird, indem die zweiten Ausrichtmittel (A_{P}) Ausrichtflächen oder - konturen an dem Produkthalter (P) aufweisen, die zur Ausrichtung mit einer relativ zum Produkthalter bewegten Zentriereinheit (F) wechselwirken, und wobei die Zentriereinheit (F) Teil des Lastaufnehmers (L) einer Wägezelle (W) ist.

17. Verfahren nach einem der beiden vorhergehenden Ansprüche, **dadurch gekennzeichnet, dass** die ersten Ausrichtmittel (A_{T}) mit der Wägezelle gekoppelt sind und die Ausrichtung des Trägers (T) bzw. die Freistellung des Produkthalters (P) im Rahmen einer vorzugsweise kontinuierlichen Relativbewegung (H) zwischen Wägezelle (Vη und Träger (T) bzw. Produkthalter (P) erfolgt, vorzugsweise in einer geraden Hubbewegung der Wägezelle relativ zu dem im Wesentlichen ortsfesten Träger (T).

18. Verfahren nach einem der vorhergehenden Verfahrensansprüche, umfassend einen oder mehrere der folgenden Verfahrensschritte:
i) Identifizierung eines Trägers (T) und/oder eines Produkthalters (P) anhand einer vorzugsweise am Träger (T) oder Produkthalter (P) angebrachten Kennung,
ii) Ermittlung der dem Träger (T) und/oder dem Produkthalter (P) zugehörigen Daten unmittelbar aus der Kennung selber oder anhand der Kennung aus einer Datenbank,
iii) Ausrichtung des Trägers (T) und/oder des Produkthalters (P) unter Nutzung der ermittelten Daten,

19. Verfahren nach einem der vorhergehenden Verfahrensansprüche, wobei das Gewicht eines nicht mit Produkt beaufschlagten Produkthalters (P) ein- oder mehrmals erfasst und daraus resultierende Daten in einer Datenbank und/oder einer dem Produkthalter (P) zugeordneten Kennung hinterlegt werden.

## Claims

1. Conveyor for transporting products,
a) comprising at least one carrier (T), which is allocated to at least one product and is formed to receive a product holder (P),
b) further comprising at least one conveying element (M), to which the carrier (T) can be coupled and which can be moved along a conveying path,
c) wherein the conveyor extends in a horizontal conveying direction (X), a likewise horizontal transverse direction (Y) at right angles thereto and a vertical direction (Z) running perpendicular to both directions (X, Y), and
d) wherein the carrier (T) and a product holder (P) received by it can be moved along the conveying path into a processing position (X_{B}), which is defined within settable tolerances at least with respect to its X and Y position,
e) wherein first movable alignment means (A_{T}) are provided in order to align the carrier (T) entering the processing position (X_{B}) in the X and/or Y direction relative to the conveying element (M) or a fixed component of the conveyor, and thereby to transfer it into a presettable target carrier position,
**characterized in that**
f) second alignment means (A_{P}) are provided for aligning the product holder (P) relatively to the carrier (T) into a presettable target product holder position, which is defined at least with respect to its X and Y position.

2. Conveyor according to claim 1, **characterized in that** the first alignment means (A_{T}) comprise at least one movable alignment element, which can impinge on the carrier (T) after it has reached the processing position to align it, in order to displace it into the target carrier position by means of the alignment element.

3. Conveyor according to claim 1 or 2, **characterized in that** the first alignment means (A_{T}) comprise at least one bolt (D), formed about a longitudinal axis (Dz), which, for alignment of the carrier (T), can be moved into an alignment opening (V) of the carrier (T) and/or against guide surfaces of the carrier (T) in order to align the carrier (T) by means of movement relative to the bolt (D) and contact with it.

4. Conveyor according to the preceding claim, **characterized in that** the at least one bolt (D) is fixed in the space with regard to its X and Y position, whereas the carrier (T) arranged in the processing position is movable within presettable tolerances in the X and/or Y direction and can therefore be aligned.

5. Conveyor according to the preceding claim, **characterized in that** the second alignment means (A_{P}) have alignment surfaces or contours on the product holder (P) which are formed for interaction with a centering unit (F) moved relative to the product holder (P).

6. Conveyor according to one of the preceding claims, further comprising at least one weigh cell (W), which is formed to measure the weight of a product holder (P) which is loaded with product or unloaded and, in the processing position, is released from its associated carrier (T), wherein the weigh cell (W) has a load introducing section (L), comprising the centering unit (F), for introducing the load to be weighed into the weigh cell (W).

7. Conveyor according to claim 6, **characterized in that** the load introducing section can be displaced relative to the product holder (P) - preferably in the Z direction - until the weight force of the product holder (P) is selectively introduced into the load introducing section or decoupled therefrom.

8. Conveyor according to claim 6 or 7, **characterized in that** the conveyor is formed for releasing the product holder (P) relative to the carrier (T) allocated to it,
a) by the carrier (T) being positionable by means of the first alignment means (A_{T}), and
b) by the product holder (P) and the carrier (T) being movable in the Z direction relative to each other via a lifting mechanism in a relative movement (H) such that product holder (P) and carrier (T) are separated from each other without force transmission and the weight force of the product holder (P) is received by the load introducing section of the weigh cell (W).

9. Conveyor according to the preceding claim, **characterized in that** the first alignment means (A_{T}), preferably formed as a bolt (D), are coupled to the weigh cell (W) such that they can be moved together with the weigh cell (W) - preferably in the Z direction.

10. Conveyor according to one of the two preceding claims, **characterized in that** the alignment of the carrier (T) or the release of the product age (P) can be carried out as part of a preferably continuous relative movement between weigh cell (W) and carrier (T) or product holder (P), preferably in a straight lifting movement of the weigh cell relative to the substantially fixed carrier (T).

11. Conveyor according to one of the preceding claims, comprising several carriers and/or product holders, wherein several carriers can each be moved along the conveying path individually or together via a conveying element (M), and wherein the carriers can in particular be arranged next to each other in the conveying direction or transverse thereto, or in the form of a row and column matrix.

12. Conveyor according to one of the preceding claims, **characterized in that** different carriers and/or product holders are each provided with a unique, preferably machine-readable mark, via which individual data can be allocated to the respective carrier or product holder.

13. Conveyor according to one of the preceding claims, **characterized in that** the material of the product holder (P) is suitable for X-ray radiography due to low absorption of X-rays, such that, by means of X-ray radiography of the product holder (P) and of a product lying on the product holder (P), foreign bodies contained in the product and/or fill quantities of the product can be detected.

14. Weighing station with a conveyor according to one of the preceding claims, **characterized in that** the conveyor comprises a weigh cell which is formed to measure the weight of a product holder (P) which is loaded with product or unloaded and, in the processing position, is released from its associated carrier (T), wherein the weigh cell (Vη has a load introducing section, comprising the centering unit, for introducing the load to be weighed into the weigh cell (W).15.

15. Process for releasing a product holder (P) in a device according to one of the device claims 1 to 14, comprising the following steps:
a) moving a carrier (T) with a product holder (P) received therein into the processing position (X_{B}),
b) aligning the carrier (T) by means of first alignment means (A_{T}) into a target carrier position,
c) moving the product holder (P) and the carrier (T) relative to each other by means of second alignment means (A_{P}) in order to transfer (release) the product holder (P) relative to the carrier (T) into a target product holder position, which is presettable and at least defined with respect to its X and Y position and in order to disengage the product holder (P) from the carrier (T) and to introduce the weight force of the product holder (P), loaded with product or unloaded, into the load introducing section (L) of a weigh cell (W).

16. Process according to the preceding claim, **characterized in that** the product holder (P) is aligned into a target product holder position via second alignment means (A_{P}), by the second alignment means (A_{P}) having alignment surfaces or contours on the product holder (P) which, for the alignment, interact with a centering unit (F) moved relative to the product holder, and wherein the centering unit (F) is part of the load receiver (L) of a weigh cell (W).

17. Process according to one of the two preceding claims, **characterized in that** the first alignment means (A_{T}) are coupled to the weigh cell and the alignment of the carrier (T) or the release of the product holder (P) is effected as part of a preferably continuous relative movement (H) between weigh cell (Vη and carrier (T) or product holder (P), preferably in a straight lifting movement of the weigh cell relative to the substantially fixed carrier (T).

18. Process according to one of the preceding process claims, comprising one or more of the following process steps:
i) identifying a carrier (T) and/or a product holder (P) using a mark preferably attached to the carrier (T) or product holder (P),
ii) determining the data relating to the carrier (T) and/or the product holder (P) directly from the mark itself or, using the mark, from a database,
iii) aligning the carrier (T) and/or the product holder (P) using the determined data.

19. Process according to one of the preceding process claims, wherein the weight of a product holder (P) not loaded with product is measured one or more times and data resulting therefrom are stored in a database and/or a mark allocated to the product holder (P).

## Revendications

1. Dispositif de transport pour le transport de produits,
a) comprenant au moins un support (T), lequel est associé à au moins un produit et est formé pour la réception d'un support de produit (P),
b) comprenant en outre au moins un élément de transport (M), auquel le support (T) peut être accouplé et qui peut être déplacé le long du chemin de convoyage,
c) le dispositif de transport s'étendant dans une direction de convoyage horizontale (X), dans une direction transversale également horizontale (Y) perpendiculaire à celle-ci et dans une direction de hauteur (Z) s'étendant perpendiculaire aux deux directions (X, Y), et
d) le support (T) et un support de produit (P) reçu par celui-ci pouvant être déplacés dans une position de traitement (X_{B}) le long du chemin de convoyage, laquelle est définie dans des marges de tolérance prédéfinissables au moins concernant ses positions X et Y,
e) des premiers moyens d'alignement (A_{T}) étant prévus, pour aligner dans la direction X et/ou Y le support (T) arrivant à la position de traitement (X_{B}) par rapport à l'élément de transport (M) ou à un composant fixe du dispositif de transport et pour le transférer ainsi à une position nominale de support prédéfinissable,
**caractérisé en ce que**
f) des seconds moyens d'alignement (AP) sont prévus, au moyen desquels le support de produit (P) peut être transféré par rapport au support (T) dans une position nominale de support de produit prédéfinissable, qui est définie au moins concernant ses positions X et Y.

2. Dispositif de transport selon la revendication 1, **caractérisé en ce que** les premiers moyens d'alignement (A_{T}) comprennent au moins un élément d'alignement déplaçable, au moyen duquel le support (T) peut, après l'atteinte de la position de traitement, être sollicité pour alignement, afin d'être déplacé par l'élément d'alignement dans la position nominale de support.

3. Dispositif de transport selon la revendication 1 ou 2, **caractérisé en ce que** les premiers moyens d'alignement (A_{T}) comprennent au moins un mandrin (D) formé autour d'un axe longitudinal (Dz), lequel peut, pour l'alignement du support (T), être déplacé dans une ouverture d'alignement (V) du support (T) et/ou contre une surface de guidage du support (T), pour aligner le support (T) par un déplacement par rapport au mandrin (D) et par le contact avec celui-ci.

4. Dispositif de transport selon la revendication précédente,
**caractérisé en ce que** l'au moins un mandrin (D) est fixe dans l'espace en ce qui concerne ses positions X et Y, tandis que le support (T) disposé dans la position de traitement est mobile dans de marges de tolérance prédéfinissable dans la direction X et/ou Y et est donc alignable.

5. Dispositif de transport selon la revendication précédente,
**caractérisé en ce que** les seconds moyens d'alignement (A_{P}) présentent des surfaces ou des contours d'alignement sur le support de produit (P), qui sont conçus pour l'interaction avec une unité de centrage (F) déplacée par rapport au support de produit (P).

6. Dispositif de transport selon l'une quelconque des revendications précédentes, comprenant en outre au moins une cellule de pesage (W), qui est formée pour la détection du poids d'un support de produit (P) chargé ou non chargé de produit et tenu dans la position de traitement par son support (T) correspondant, la cellule de pesage (W) présentant une section d'introduction de charge (L) comprenant l'unité de centrage (F) pour l'introduction de la charge à peser dans la cellule de pesage (W).

7. Dispositif de transport selon la revendication 6, **caractérisé en ce que** la section d'introduction de charge peut être déplacée par rapport au support de produit (P) - de préférence dans la direction Z - jusqu'à ce que la force de poids du support de produit (P) est au choix introduite dans la section d'introduction de charge ou désaccouplé de celle-ci.

8. Dispositif de transport selon la revendication 6 ou 7, **caractérisé en ce que** le dispositif de transport est formé pour la libération du support de produit (P) par rapport au support (T) qui lui est associé,
a) en pouvant positionner le support (T) au moyen des premiers moyens d'alignement (At), et
b) en pouvant déplacer le support de produit (P) et le support (T) l'un par rapport à l'autre dans un mouvement relatif (H) dans la direction Z par le biais d'un mécanisme de levage de telle façon que le support de produit (P) et le support (T) sont séparés l'un de l'autre sans transmission de force et la force de poids du support de produit (P) est reprise par la section d'introduction de charge de la cellule de pesage (W).

9. Dispositif de transport selon la revendication précédente,
**caractérisé en ce que** les premiers moyens d'alignement (A_{T}) formés de préférence comme mandrin (D) sont accouplés de telle façon avec la cellule de pesage (W) qu'ils peuvent être déplacés ensemble avec la cellule de pesage (W) - de préférence dans la direction Z.

10. Dispositif de transport selon l'une quelconque des revendications précédentes, **caractérisé en ce que** l'alignement du support (T) ou la libération du support de produit (P) peut être effectué dans le cadre d'un mouvement relatif de préférence continu entre la cellule de pesage (W) et le support (T) ou le support de produit (P), de préférence dans un mouvement de levage rectiligne de la cellule de pesage par rapport au support (T) essentiellement fixe.

11. Dispositif de transport selon l'une quelconque des revendications précédentes, comprenant plusieurs supports et/ou supports de produits, plusieurs supports pouvant être déplacés respectivement individuellement ou ensemble par un élément de transport (M) le long du chemin de convoyage, et les supports pouvant être ce faisant disposés en particulier dans la direction de transport ou perpendiculaire à celle-ci couchés les uns à côté des autres ou en forme matricielle dans une matrice de lignes et de colonnes.

12. Dispositif de transport selon l'une quelconque des revendications précédentes, **caractérisé en ce que** différents supports et/ou supports de produit sont munis respectivement d'un identifiant unique, de préférence lisible par machine, par le biais duquel des données individuelles peuvent être associées aux supports ou supports de produit respectifs.

13. Dispositif de transport selon l'une quelconque des revendications précédentes, **caractérisé en ce que** le matériau du support de produit (P) est adapté pour les rayons X en raison de la faible absorption de rayons X, de telle sorte qu'au moyen de rayons X du support de produit (P) et d'un produit situé sur le support de produit (P) des corps étrangers et/ou de quantités de remplissage du produit peuvent être détectés.

14. Dispositif de transport selon l'une quelconque des revendications précédentes, comprenant en outre au moins une cellule de pesage, qui est formée pour la détection du poids d'un support de produit (P) chargé ou non chargé de produit et tenu dans la position de traitement par son support (T) correspondant, la cellule de pesage présentant une section d'introduction de charge pour l'introduction de la charge à peser dans la cellule de pesage.

15. Procédé pour la libération d'un support de produit (P) dans un dispositif selon l'une quelconque des revendications 1 à 14, comprenant les étapes suivantes :
a) le déplacement d'un support (T) comprenant un support de produit (P) reçu en lui à la position de traitement (X_{B}),
b) l'alignement du support (T) au moyen de premiers moyens d'alignement (A_{T}) dans une position nominale de support,
c) le déplacement relatif du support de produit (P) et du support (T) l'un par rapport à l'autre à l'aide de seconds moyens d'alignement (AP), pour transférer (libérer) le support de produit (P) par rapport au support (T) dans une position nominale de support de produit prédéfinissable et définie au moins concernant ses positions X et Y, et pour détacher le support de produit (P) du support (T) et pour introduire la force de poids du support de produit (P) chargé ou non chargé de produit dans la section d'introduction de charge (L) d'une cellule de pesage (W).

16. Procédé selon la revendication précédente, **caractérisé en ce que** le support de produit (P) est aligné par le biais de seconds moyens d'alignement (A_{P}) dans une position nominale de support de produit, par le fait que les seconds moyens d'alignement (A_{P}) présentent des surfaces ou contours d'alignement sur le support de produit (P), qui interagissent pour l'alignement avec une unité de centrage (F) et l'unité de centrage (F) faisant partie du récepteur de charge (L) d'une cellule de pesage (W).

17. Procédé selon l'une quelconque des revendications précédentes, **caractérisé en ce que** les premiers moyens d'alignement (A_{T}) sont accouplés à la cellule de pesage et l'alignement du support (T) ou la libération du support de produit (P) s'effectue dans le cadre d'un mouvement relatif (H) de préférence continu entre la cellule de pesage (W) et le support (T) ou le support de produit (P), de préférence dans un mouvement de levage rectiligne de la cellule de pesage par rapport au support (T) essentiellement fixe.

18. Procédé selon l'une quelconque des revendications précédentes, comprenant une ou plusieurs des étapes de procédé suivantes :
i) l'identification d'un support (T) et/ou d'un support de produit (P) à l'aide d'un identifiant apposé de préférence sur le support (T) ou le support de produit (P),
ii) la détermination des données appartenant au support (T) et/ou au support de produit (P) directement à partir de l'identifiant lui-même ou à l'aide de l'identifiant d'une base de données,
iii) l'alignement du support (T) et/ou du support de produit (P) en utilisant les données déterminées.

19. Procédé selon l'une quelconque des revendications de procédé précédentes, le poids d'un support de produit (P) non sollicité de produit étant détecté une ou plusieurs fois et les données en résultant étant enregistrées dans une base de données et/ou dans un identifiant associé au support de produit (P).
